# EUROPÄISCHE PATENTANMELDUNG

(11) **EP 2 998 619 A1**
(43) Veröffentlichungstag der Anmeldung: **23.03.2016**
(21) Anmeldenummer: 15180667.6
(22) Anmeldetag: 12.08.2015
(51) Int. Cl.: F16J 15/16, F16J 15/40

(54) **WELLENDICHTUNGSSYSTEM UND EIN KOMPRESSOR MIT EINEM ENTSPRECHENDEN WELLENDICHTUNGSSYSTEM**

(30) Priorität: 03.09.2014 DE 102014217647
(71) Anmelder: MTU Aero Engines AG, 80995 München (DE)
(72) Erfinder: Flouros, Michael, 80686 München (DE); Scharl, Richard, 85757 Karlsfeld (DE); Cottier, Francois, 85716 Unterschleißheim (DE)

(57) **Zusammenfassung**

Die Erfindung betrifft Wellendichtungssystem, das axial zwischen einer ersten Kammer (2) und einer zweiten Kammer (7) angeordnet ist. Das Wellendichtungssystem umfasst eine Welle (5), ein um die Welle (5) angeordnetes Gehäuse (8) und mindestens eine Dichtung (4), die insbesondere axial näher zur zweiten Kammer (7) angeordnet ist, wobei die erste Kammer (2) ein Fluid aufweist und die zweite Kammer (7) vor diesem Fluid zu schützen ist. Dabei weist die Dichtung (4) mindestens eine mechanische Druckerhöhungseinrichtung (6, 6', 6"; 11,11';13)auf.

## Beschreibung

Die Erfindung betrifft ein Wellendichtungssystem nach dem Oberbegriff des Anspruchs 1 und ein Kompressor nach dem Anspruch 13 mit einem entsprechenden Wellendichtungssystem.

Zur Trennung von Bereichen mit einer Flüssigkeit von Bereichen ohne diese Flüssigkeit werden Dichtungen verwendet. Dabei haben sich mit Gas beaufschlagte Dichtungen bewährt (DE 1 106 567). Das Gas (beispielsweise Druckluft) kann mittels eines eigenen Kompressors bereit gestellt werden, wie in der Druckschrift US 4,350,345 beschrieben. Dieser separate Druckluftkompressor ist für instationäre Gasturbinen ungeeignet, da dieser zusätzlich Raum benötigt und das Gewicht der Gasturbine unnötig erhöht.

Stattdessen wird Druckluft aus dem Verdichter abgezweigt. Solange die Gasturbine bei ausreichender Leistung betrieben wird (beispielsweise Reisegeschwindigkeit), ist der Druckunterschied an der mit Gas beaufschlagten Dichtung ausreichend hoch, so dass die Flüssigkeit nicht über diese Dichtung fliesen kann. Damit verbleibt die Flüssigkeit im gewünschten Bereich (beispielsweise in einer Kammer).

Wird dagegen die Gasturbine im Leerlauf betrieben, d.h. die Gasturbine wird mit verringerter Leistung betrieben, so reduziert sich der vom Verdichter erzeugte Gasdruck und so auch der Druckunterschied an der mit Gas beaufschlagten Dichtung. Dabei kann der Druckunterschied soweit fallen, dass dieser allerdings nicht ausreichend hoch ist, um die Flüssigkeit am Passieren der Dichtung zu hindern, so dass die Flüssigkeit an der Dichtung dann doch vorbei fliesen kann. Dies hat allerdings den Nachteil, dass andere Bereiche der Gasturbine mit dieser Flüssigkeit (beispielsweise Schmieröl) kontaminiert werden können. Im schlimmsten Fall kann eine solche Kontamination sogar zum Totalausfall der Gasturbine führen.

Somit liegt der vorliegenden Erfindung die Aufgabe zu Grunde ein Wellendichtungssystem vorzustellen, dass unabhängig von der abgerufenen Leistung einer Gasturbine ist ohne dabei das Gewicht der Gasturbine zu erhöhen.

Die Aufgabe wird durch die Merkmale des Anspruchs 1 oder durch die Merkmale des Anspruchs 13 gelöst.

Die Erfindung betrifft ein Wellendichtungssystem das axial zwischen einer ersten Kammer und einer zweiten Kammer angeordnet ist. Das Wellendichtungssystem umfasst eine Welle, ein um die Welle angeordnetes Gehäuse und mindestens eine Dichtung, die insbesondere axial näher zur zweiten Kammer angeordnet ist, wobei die erste Kammer ein Fluid aufweist und die zweite Kammer vor diesem Fluid zu schützen ist. Die Dichtung weist mindestens eine mechanische Druckerhöhungseinrichtung auf.

Unter einem Fluid kann eine Schmierflüssigkeit und/oder Dämpfe der Schmierflüssigkeit verstanden werden.

In einer vorteilhaften Ausgestaltung der Erfindung ist die Druckerhöhungseinrichtung derart geformt, dass der Druck eines an der Dichtung und in Richtung der zweiten Kammer fliesenden Sperrgases erhöht wird. In vorteilhafter Weise baut sich der Druck vor der zweiten Kammer derart auf, dass kein Sperrfluid aus der zweiten Kammer in erste Kammer entweichen kann.

In einer weiteren vorteilhaften Ausgestaltung der Erfindung rotiert mindestens eine Druckerhöhungseinrichtung im Betrieb und/oder steht mindestens eine Druckerhöhungseinrichtung, wobei vorzugsweise die rotierende Druckerhöhungseinrichtung auf der axialen Höhe der stehenden Druckerhöhungseinrichtung angeordnet ist. Dabei kann unter rotierend verstanden werden, dass sich die Druckerhöhungseinrichtung synchron mit der Welle dreht. Unter stehend kann verstanden werden, dass die Druckerhöhungseinrichtung von der Wellenrotation entkoppelt ist. So steht beispielsweise das Gehäuse oder jedes am Gehäuse angeordnete Bauteil.

In einer weiteren vorteilhaften Ausgestaltung der Erfindung ist die Druckerhöhungseinrichtung eine spiralförmige Nut, die vorzugsweise am Innenumfang des Gehäuses angeordnet ist. Es ist auch vorstellbar, dass die spiralförmige Nut zusätzlich oder alternativ auf, am bzw. in der Mantelfläche der Welle angeordnet ist. Die spiralförmige Nut kann beispielsweise ein Innen- bzw. ein Außengewinde sein. In Abhängigkeit der Rotationsrichtung der Welle hat das Gewinde bzw. die spiralförmige Nut entweder einen Rechtslauf oder einen Linkslauf. Das Gewinde (bzw. die spiralförmige Nut) kann mindestens eine komplette Windung aufweisen. Damit wird in vorteilhafterweise ein um die Welle bzw. am Gehäuse laufender und in Richtung der ersten Kammer fließender Luftstrudel gebildet.

In einer weiteren vorteilhaften Ausgestaltung der Erfindung ist die Druckerhöhungseinrichtung eine Erhöhung und/oder eine Vertiefung, die vorzugsweise auf der Welle angeordnet ist. Es ist auch vorstellbar, dass die Vertiefungen und/oder Erhöhungen zusätzlich oder alternativ am bzw. Gehäuse angeordnet sein können. Die Vertiefungen und/oder Erhöhungen können bspw. direkt am Gehäuse bzw. Welle angeordnet sein oder ein Adapterstück ist am Gehäuse (bzw. Welle) angeordnet, auf dem sich Vertiefungen und/oder Erhöhungen angeordnet sind. Ferner können die Vertiefungen und/oder Erhöhungen einen dreiecksförmigen Querschnitt aufweisen. Dies hat den Vorteil, dass die Sperrluft in Umfangsrichtung verstärkt mitgenommen wird. Wie auch später erwähnt wird, kann mindestens eine Erhöhung und/oder mindestens eine Vertiefung schräg zur Rotationsachse der Welle verlaufen.

Eine Erhöhung im Sinne der Erfindung ist zusätzliches Material, das über der Mantelfläche der Welle ragt. Dagegen ist eine Vertiefung im Sinne der Erfindung entferntes Material, das aus der Mantelfläche der entnommen wurde, so dass die Vertiefung in die Welle eingelassen ist. Ist der an der Dichtung entstandene Differenzdruck zu klein, dann kann in unerwünschter Weise das Fluid aus der ersten Kammer in die zweite Kammer fliesen. Diese Vertiefung in bzw. diese Erhöhungen auf der Welle bewirken einen zusätzlich Aufbau des Gasdrucks, so dass der Differenzdruck nicht unter einem kritischen Wert fallen kann. Damit wird wirksam verhindert, dass das Fluid aus der ersten Kammer in die zweite Kammer fliest. Damit lenken die Erhebungen bzw. Vertiefungen an bzw. in der Welle einen verstärkten Gasmassestrom vorzugsweise in Umfangsuchtung.

Sofern die rotierende Druckerhöhungseinrichtung mindestens eine Erhöhung und/oder eine Vertiefung aufweist und die stehende Druckerhöhungseinrichtung mindestens eine spiralförmige Nut aufweist, dann können die Erhöhungen und/oder die Vertiefungen auf der axialen Höhe der spiralförmigen Nut angeordnet sein. Darunter ist zu verstehen, dass die Erhöhungen und/oder Vertiefungen in radialer Richtung betrachtet genau gegenüber der spiralförmigen Nut angeordnet sind.

In einer vorteilhaften Ausgestaltung der Erfindung kann mindestens eine der Erhöhungen und/oder mindestens eine der Vertiefungen schräg zur Rotationsachse der Welle verlaufen. Dabei ist die Schräge zur Rotationsachse derart gewählt, dass der Fluss des Gases in Richtung der ersten Kammer erhöht wird, um dadurch den Gasdruck vor der ersten Kammer zusätzlich zu erhöhen.

In einer weiteren vorteilhaften Ausgestaltung der Erfindung weist das Wellendichtungssystem mindestens eine weitere Dichtung auf, die axial näher zur ersten Kammer angeordnet ist. Ferner kann die weitere Dichtung radial zwischen der Welle und dem Gehäuse angeordnet sein. Vorzugsweise kann die Dichtung von der weiteren Dichtung axial beabstandet sein. Damit kann die Dichtung stromauf zur weiteren Dichtung angeordnet sein. Die Strömungsrichtung, auf die Bezug genommen wird, zeigt in Richtung von der zweiten Kammer zur ersten Kammer. Diese weitere Dichtung kann als eine Gasdichtung in Form einer Labyrinth-Dichtung ausgelegt sein. Vorzugsweise ist damit der Gasdruck (in Strömungsrichtung betrachtet) vor der weiteren Dichtung größer als der Gasdruck (in Strömungsrichtung betrachtet) nach der weiteren Dichtung. Der Bereich nach der weiteren Dichtung kann dem Bereich der ersten Kammer entsprechen. Es hat sich als vorteilhaft erwiesen, dass der Druck des an der Dichtung und in Richtung der weiteren Dichtung fliesenden Sperrgases vor dieser weiteren Dichtung erhöht wird. Dadurch kann sichergestellt werden, dass auch bei niedrigen Drehzahlen der Druck von der weiteren Dichtung ausreichend hoch ist, so dass das schädliche Fluid aus der zweiten Kammer nicht an dieser weiteren Dichtung in der Richtung der Dichtung fliesen kann.

In einer weiteren vorteilhaften Ausgestaltung der Erfindung ist axial zwischen der Dichtung und der weiteren Dichtung und radial zwischen der Welle und dem Gehäuse ein Ringraum vorhanden. Damit ist der Ringraum in Strömungsrichtung betrachtet vor der weiteren Dichtung und nach der Dichtung angeordnet. Dieser Ringraum bietet in vorteilhafterweise die Möglichkeit das in Richtung der ersten Kammer fliesende Gas zwischen zu speichern, um eventuelle Druckschwankungen ausgleichen zu können.

In einer weiteren vorteilhaften Ausgestaltung der Erfindung ist zwischen der Dichtung und der weiteren Dichtung und radial zwischen der Welle und dem Gehäuse an der Innenseite des Gehäuses eine Schulter angeordnet. Die vorzugsweise radial nach innenragende Schulter kann einen Innenradius aufweisen, der kleiner ist als der Innenradius des Gehäuses auf der Höhe der Dichtung, sodass der Innenradius des Innengewindes größer ist als der Innenradius der Schulter.

In einer weiteren vorteilhaften Ausgestaltung der Erfindung weist die weitere Dichtung, insbesondere auf der Mantelfläche der Welle, mindestens einen Dichtfin und/oder, insbesondere auf der Innenseite des Gehäuses, einen Belag auf. Der Dichtfin und der Belag sind vorzugsweise in axialer Richtung auf gleicher Höhe angeordnet, so dass der Dichtfin sich in den Belag einschneiden kann. Der Belag kann ein Einlaufbelag oder eine Honigwabenkonstruktion mit abuebbarem Material sein.

In einer weiteren vorteilhaften Ausgestaltung der Erfindung fliest von der zweiten Kammer zur ersten Kammer entlang der Welle ein Sperrgas vorzugsweise Luft. Dabei fließt dieses Sperrgas von der zweiten Kammer zuerst über die Dichtung. Dann fließt das Sperrgas, sofern vorhanden, an der nach innenragenden Schulter vorbei in den Ringraum. Schließlich fliest das Sperrgas über die weitere Dichtung in die zweite Kammer.

In einer weiteren vorteilhaften Ausgestaltung der Erfindung wird das Sperrgas von einem Kompressor, insbesondere von einem Triebwerksverdichter, geliefert. Dies hat den Vorteil, dass kein zusätzlicher Kompressor benötigt wird, um beispielsweise Druckluft zu erzeugen.

Weitere Vorteilhafte Ausgestaltung der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- Figur 1: einen Längsschnitt durch einen oberen Bereich eines Gehäuses mit einer darin befindlichen Welle;
- Figur 2: einen Schnitt entlang der Linie A-A in Figur 1 durch die Welle, wobei die Mantelfläche der Welle abgewickelt abgebildet ist.

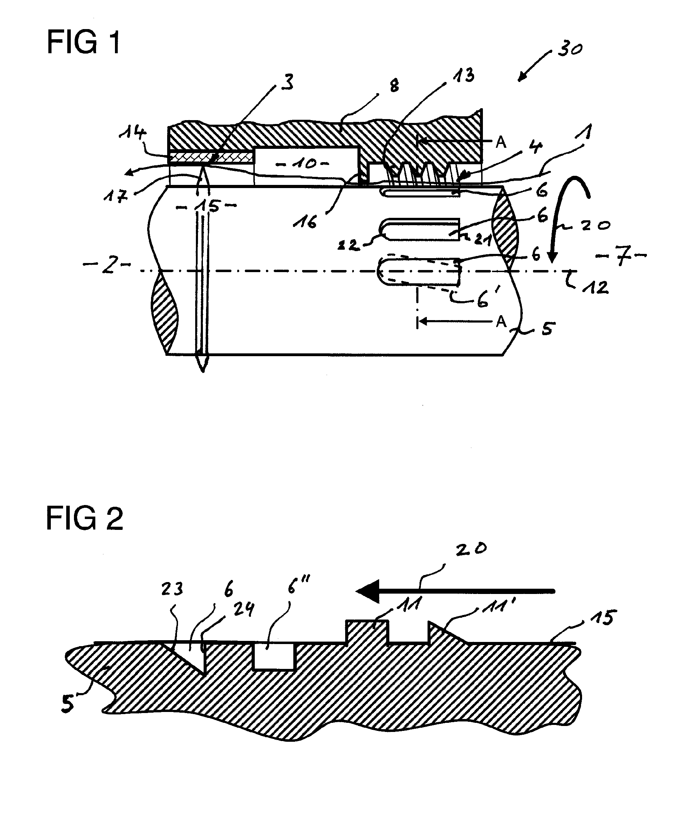

Die Figur 1 zeigt ein erfindungsgemäßes Wellendichtungssystem 30 mit einer Dichtung 4 und einer weiteren Dichtung 3 zum Abdichten einer ersten auf der linken Seiten einzeichneten Kammer 2 mit einem Fluid (beispielsweise mit einer Flüssigkeit) gegenüber einer zweiten auf der rechten Seiten einzeichneten Kammer 7 ohne diese Flüssigkeit. Ein Gehäuse 8 ist um eine Welle 5 angeordnet, die sich in Pfeilrichtung 20 dreht. Hier wurde der übersichtshalber nur die obere Hälfte des Gehäuses 8 abgebildet. In der Figur 1 fliest von rechts nach links ein Sperrgas 1 entlang der Welle 5, also von der zweiten Kammer 7 in die erste Kammer 2. Dieses Sperrgas wird vorzugsweise von einem Triebwerksverdichter geliefert. Die Dichtung 4 weist auf der Innenseite des Gehäuses 8 recht in der Figur 1 ein Innengewinde 13 mit beispielsweise drei Windungen auf. Das Innengewinde kann aber auch mindestens eine Windung bis hinzu 10 Windungen aufweisen. Das Innengewinde 13 weist hier ein Linksgewinde auf. Dreht sich die Welle 5 dagegen in zur eingezeichneten Richtung 20 entgegen gesetzt, so muss das Innengewinde als Rechtsgewinde ausgelegt sein. Die Dichtung 4 weist auf der Mantelfläche 15 der Welle 5 mehrere Vertiefungen 6 auf. Diese Vertiefungen 6 sind axial auf der gleichen Höhe angeordnet wie das Innengewinde 13. Diese Vertiefungen verlaufen im Wesentlichen parallel zur Rotationsachse 12 der Welle 5. Vorzugsweise können die Vertiefungen 6' aber auch zur Rotationsachse geneigt sein, wie gestrichelt dargestellt. Das stromaufwärtige Ende der Vertiefung 6 weist eine quer zur Rotationsachse 12 verlaufende Kante 21 auf. Dagegen ist das stromabwärtige Ende der Vertiefung 6 eine im Wesentlichen halbkreisförmige Kante 22. Es ist anzumerken, dass die Form der Vertiefung 6 beliebig sein kann.

Stromab zum Innengewinde 13 folgt eine radial nach innenragende Schulter 16, die am Gehäuse 8 angeordnet ist und über den gesamten Umfang verläuft. Der Innenradius der Schulter 16 kann kleiner sein als der Innenradius des Innengewindes 13. Diese nach innenragende Schulter 16 kann auch ganz entfallen. Stromab zur Schulter 16 folgt eine im Gehäuse 8 eingelassene Ringnut 10, dessen Innenradius in diesem Ausführungsbeispiel größer ist als der Innenradius des Innengewindes 13. Stromab zum Ringraum 10 folgt die weitere Dichtung 3. Diese weitere Dichtung 3 kann auf der Innenseite des Gehäuses 8 einen Belag 14 aufweisen, insbesondere einen Einlaufbelag. Auf der Mantelfläche 15 der Welle 5 weist die weitere Dichtung 3 einen Dichtfin 17 auf, der über den gesamten Umfang der Mantelfläche 15 verläuft. Es können mehrere zueinander axial versetzt angeordnete Dichtfins vorgesehen sein, um eine Labyrinth-Dichtung zu realisieren. Die Spitze des Dichtsfins 17 kann in den Belag 14 einschneiden. Andere Dichtungsarten sind vorstellbar wie eine Bürstendichtung und/oder eine in Kontakt stehende Gleitringdichtung. Stromab zur weiteren Dichtung 3 folgt schlussendlich die erste Kammer 2.

Die Figur 2 zeigt einen Schnitt entlang der Linie A-A in Figur 1 durch die Welle 5, wobei die Mantelfläche 15 der Welle 5 abgewickelt abgebildet ist. Die Welle 5 dreht sich von rechts nach links entsprechend der Rotationsrichtung 20. Dieser Schnitt zeigt verschiedene Ausführungsformen von Vertiefungen bzw. von Erhöhungen. Ganz links ist die in Figur 1 abgebildete Vertiefung 6 mit dreiecksförmigem Querschnitt dargestellt. Dabei verläuft eine erste Seitenwandung 23 keilförmig in die Welle 5 hinein. Eine zweite Seitenwandung 24 der Vertiefung 6 verläuft im Wesentlichen radial. Rechts daneben kann eine weitere Vertiefung 6" einen rechteckförmigen Querschnitt aufweisen. Statt oder in Kombination können neben den Vertiefungen 6 und 6" auch Erhöhungen 11 und 11' vorgesehen sein, wie in der Figur 2 rechts abgebildet ist. Die eine Erhöhung 11 weist einen rechteckförmigen Querschnitt und die andere Erhöhung 11' weist einen dreiecksförmigen Querschnitt auf.

In weiteren nicht dargestellten Ausführungsbeispielen kann die Mantelfläche 15 beispielsweise nur Erhöhungen mit gleichem Querschnitt aufweisen, die über den Umfang gleichverteilt sein können. Andere Verteilungen sind aber auch denkbar. Allerdings kann die Mantelfläche 15 auch Erhöhungen 11, 11' und Vertiefungen 6, 6' und 6" beliebig miteinander kombinieren. Ebenso können beispielsweise in Umfangsrichtung benachbarte Vertiefungen unterschiedliche Querschnitte aufweisen.

Vorzugsweise wird ein solches Wellendichtungssystem 30 für ein Lager (beispielsweise Gleitlager bzw. Kugellager) verwendet, das stromauf einer Öldichtung, insbesondere einer Karbonöldichtung, angeordnet sein kann.

### Bezugszeichenliste

- 1: Sperrgas
- 2: erste Kammer
- 3: weitere Dichtung
- 4: Dichtung
- 5: Welle
- 6: Vertiefung
- 7: zweite Kammer
- 8: Gehäuse
- 10: Ringnut
- 11: Erhöhungen
- 12: Rotationsachse von 5
- 13: Innengewinde
- 14: Belag
- 15: Mantelfläche von 5
- 16: Schulter
- 17: Dichtfin
- 20: Rotationsrichtung von 5
- 21: stromaufwärtige Kante
- 22: stromabwärtige Kante
- 23: erste Seitenwandung von 6
- 24: zweite Seitenwandung von 6
- 30: Wellendichtungssystem

## Patentansprüche

1. Wellendichtungssystem, das axial zwischen einer ersten Kammer (2) und einer zweiten Kammer (7) angeordnet ist, umfasst:
- eine Welle (5),
- ein um die Welle (5) angeordnetes Gehäuse (8) und
- mindestens eine Dichtung (4), die insbesondere axial näher zur zweiten Kammer (7) angeordnet ist,
wobei die erste Kammer (2) ein Fluid aufweist und die zweite Kammer (7) vor diesem Fluid zu schützen ist,
**dadurch gekennzeichnet, dass** die Dichtung (4) mindestens eine mechanische Druckerhöhungseinrichtung (6, 6', 6"; 11, 11'; 13) aufweist.

2. Wellendichtungssystem nach Anspruch 1, **dadurch gekennzeichnet, dass** die Druckerhöhungseinrichtung (6, 6', 6"; 11, 11'; 13) derart geformt ist, dass der Druck eines an der Dichtung (4) und in Richtung der zweiten Kammer (7) fliesenden Sperrgases (1) erhöht wird.

3. Wellendichtungssystem nach mindestens einem der vorherigen Ansprüche, **dadurch gekennzeichnet, dass** mindestens eine Druckerhöhungseinrichtung (6, 6', 6"; 11, 11') im Betrieb rotiert und/oder mindestens eine Druckerhöhungseinrichtung (13) steht, wobei vorzugsweise die rotierende Druckerhöhungseinrichtung (6, 6', 6"; 11, 11') auf der axialen Höhe der stehenden Druckerhöhungseimichtung (13) angeordnet ist.

4. Wellendichtungssystem nach mindestens einem der vorherigen Ansprüche, **dadurch gekennzeichnet, dass** die Druckerhöhungseinrichtung eine spiralförmige Nut (13) ist, die vorzugsweise am Innenumfang des Gehäuses (8) und/oder auf der Welle (5) angeordnet ist.

5. Wellendichtungssystem nach mindestens einem der vorherigen Ansprüche, **dadurch gekennzeichnet, dass** die Druckerhöhungseinrichtung eine Erhöhung (11, 11') und/oder eine Vertiefung (6, 6', 6") ist, die vorzugsweise am Innenumfang des Gehäuses (8) und/oder auf der Welle (5) angeordnet ist.

6. Wellendichtungssystem nach Anspruch 5, **dadurch gekennzeichnet, dass** mindestens eine der Erhöhungen (11, 11') und/oder mindestens eine der Vertiefungen (6, 6') parallel zur Rotationsachse (12) der Welle (5) verlaufen und/oder
mindestens eine der Erhöhungen (11, 11') und/oder mindestens eine der Vertiefungen (6") schräg zur Rotationsachse (12) verlaufen.

7. Wellendichtungssystem nach mindestens einem der vorherigen Ansprüche, **dadurch gekennzeichnet, dass** das Wellendichtungssystem mindestens eine weitere Dichtung (3) aufweist, die axial näher zur ersten Kammer (2) angeordnet ist, und/oder die weitere Dichtung (3) radial zwischen der Welle (5) und dem Gehäuse (8) angeordnet ist.

8. Wellendichtungssystem nach Anspruch 7, **dadurch gekennzeichnet, dass** axial zwischen der Dichtung (4) und der weiteren Dichtung (3) und radial zwischen der Welle (5) und dem Gehäuse (8) ein Ringraum (10) vorhanden ist.

9. Wellendichtungssystem nach mindestens einem der Ansprüche 7 bis 8, **dadurch gekennzeichnet, dass** zwischen der Dichtung (4) und der weiteren Dichtung (3) und radial zwischen der Welle (5) und dem Gehäuse (8) an der Innenseite des Gehäuses (8) eine Schulter (16) angeordnet ist.

10. Wellendichtungssystem nach mindestens einem der Ansprüche 7 bis 9, **dadurch gekennzeichnet, dass** die weitere Dichtung (3), insbesondere auf der Mantelfläche (15) der Welle (5), mindestens einen Dichtfin (17) und/oder, insbesondere auf der Innenseite des Gehäuses (8), einen Belag (14) aufweist.

11. Wellendichtungssystem nach mindestens einem der Ansprüche 7 bis 10, **dadurch gekennzeichnet, dass** von der zweiten Kammer (7) zur ersten Kammer (2) entlang der Welle (5) ein Sperrgas (1) fliest.

12. Wellendichtungssystem nach Anspruch 11, **dadurch gekennzeichnet, dass** das Sperrgas (1) von einem Kompressor, insbesondere von einem Triebwerksverdichter, geliefert wird.

13. Kompressor, insbesondere ein Triebwerksverdichter, umfasst mindestens ein Wellendichtungssystem nach einem der obigen Ansprüche.
